Europäisches Patentamt

European Patent Office

Office européen des brevets

(11) Veröffentlichungsnummer : **0 050 304**
**B1**

(12) **EUROPÄISCHE PATENTSCHRIFT**

(45) Veröffentlichungstag der Patentschrift :
13.06.84

(51) Int. Cl.³ : **G 06 F   3/04**, B 66 B   1/18

(21) Anmeldenummer : **81108303.9**

(22) Anmeldetag : **14.10.81**

(54) **Multiprozessorsystem mit Ermittlung des ein kleinstes Ergebnis erzielenden Prozessors.**

(30) Priorität : **20.10.80 CH 7798/80**

(43) Veröffentlichungstag der Anmeldung :
**28.04.82 Patentblatt 82/17**

(45) Bekanntmachung des Hinweises auf die Patenterteilung : **13.06.84 Patentblatt 84/24**

(84) Benannte Vertragsstaaten :
**AT BE DE FR IT NL**

(56) Entgegenhaltungen :
EP-A- 0 005 722
DE-A- 2 517 514
GB-A- 2 019 069
US-A- 3 731 765
US-A- 3 810 114
**Fellmeier, « Parallel Computers - Parallel Mathematics », Proceedings of the IMACS (AICA) - GI, Symposium, März 14-16, 1977, S. 333-337**

(73) Patentinhaber : **INVENTIO AG**
**Seestrasse 55**
**CH-6052 Hergiswil NW (CH)**

(72) Erfinder : **Friedli, Paul, Dr.**
**Bucheggstrasse 172**
**CH-8057 Zürich (CH)**
Erfinder : **Hinderling, Thomas, Dr.**
**Ottigenbühlstrasse 15**
**CH-6030 Ebikon (CH)**

## Beschreibung

Die Erfindung betrifft ein Multiprozessorsystem, bestehend aus mehreren Prozessoren, die an einer gemeinsamen Sammelleitung angeschlossen sind, gemäss Oberbegriff des Anspruches 1.

In der Druckschrift Feilmeier, « Parallel Computers — Parallel Mathematics » Proceedings of the IMACS (AICA) — GI, Symposium, März 14-16, 1977, Technische Universität München, Seiten 333 bis 337, wird ein derartiges Multiprozessorsystem beschrieben. Die Prozessoren melden hierbei einer Synchronisationseinrichtung ihre Bereitschaft zum Datentransfer. Nach Eintreffen der Meldung des letzten Prozessors veranlasst die Synchronisationseinrichtung bei allen Prozessoren gleichzeitig den Start einer DMA-Operation. Die DMA-Bausteine arbeiten nun in der Weise, dass, wenn ein DMA-Baustein Daten aus dem Speicher seines zugeordneten Prozessors liest und auf die Sammelleitung überträgt, die anderen DMA-Bausteine die Daten auf der Sammelleitung lesen und in die Speicher ihrer zugeordneten Prozessoren einschreiben.

Bei anderen Multiprozessorsystemen überwacht jeder Prozessor die Datenübertragungsvorgänge auf der Sammelleitung im Hinblick auf für ihn bestimmte Informationen. Die über die Sammelleitung übertragenen Daten enthalten jeweils die Adressen derjenigen Prozessoren, für welche die betreffenden Informationen bestimmt sind, wobei alle Prozessoren zwecks Bestimmung des Ziel-Prozessors die Adressen dekodieren. Diese bekannten Systeme haben den Nachteil, dass sie sehr zeitaufwendig arbeiten, da alle Prozessoren die Sammelleitung überwachen und die Adressen dekodieren müssen, wobei lediglich der Ziel-Prozessor angesteuert wird. Ausserdem erfordert dieses Verfahren einen relativ grossen Software-Aufwand.

Mit der deutschen Offenlegungsschrift 29 13 288 ist ein Multiprozessorsystem bekannt geworden, bei dem diese Nachteile vermieden werden sollen. Hierbei sind zwischen jedem Prozessor und der Sammelleitung Übertragungseinheiten angeordnet, die derart eingerichtet sind, dass der Datenaustausch mit dem zugeordneten Prozessor nur während eines vorbestimmten, wiederholt auftretenden Zeitabschnittes stattfinden kann. Auf diese Weise überwachen die Überwachungseinheiten anstelle der jeweils zugeordneten Prozessoren die Sammelleitung im Hinblick auf Unterbrechungsaufforderungen anderer Prozessoren, so dass jeweils nur der Datenverarbeitungsablauf des adressierten Prozessors unterbrochen wird.

Mit vorstehend beschriebenem Multiprozessorsystem können bestimmte Datenverarbeitungsaufgaben nicht optimal gelöst werden. Soll beispielsweise ein Vergleich von in den einzelnen Prozessoren nach ähnlichen Kriterien ermittelten Werten durchgeführt werden, so könnte der Vergleich jeweils zwischen zwei Prozessoren vorgenommen werden, wobei das Ergebnis mit dem Wert eines weiteren Prozessors verglichen wird. In dieser Weise kann verfahren werden, bis der Prozessor mit beispielsweise dem kleinsten Wert ermittelt ist. Dieses Verfahren würde je nach Anzahl Prozessoren ziemlich viel Zeit beanspruchen und einen erheblichen Aufwand an Software erfordern, wobei der Datentransfer über die Sammelleitung zu anderen Zwecken während der Vergleichsperiode stark eingeschränkt ist.

Bei einem Mehrfachdigitalkomparator nach der US-Patentschrift US-A-3 731 765 werden in Zähler gespeicherte Binärzahlen zum Zwecke der Feststellung der kleinsten Binärzahl miteinander verglichen. Der Vergleich erfolgt in der Weise, dass alle Stellen der Zähler beginnend mit der höchsten Stelle gleichzeitig abgetastet werden. Jedesmal wenn eine Stelle mit einer « 1 » gefunden wird, scheidet der betreffende Zähler aus. Der Abtastvorgang wird solange fortgesetzt, bis der Zähler mit der kleinsten Zahl gefunden ist. Als Abtaster wird ein Ringzähler verwendet, dessen Ausgänge und die Ausgänge der abzutastenden Zähler mit den Eingängen von NAND-Gliedern verbunden sind. Die Ausgänge der NAND-Glieder sind zusammengeschaltet und stehen mit einem Ausscheidungs-Schaltkreis in Verbindung. Dieser erzeugt zwei Ausgangssignale, wobei das eine anzeigt, dass der betreffende Zähler ausgeschieden ist, und das andere signalisiert, dass noch nicht ausgeschiedene Zähler vorhanden sind. Durch Vergleich dieser Signale wird nun der Zähler mit dem kleinsten Zählerstand ermittelt. Bei diesem Digitalkomparator wächst der Schaltungsaufwand mit der Stellenzahl der Zähler und die Zeitdauer eines Vergleiches kann beträchtlich sein. Ausserdem müsste bei Anwendung in Multiprozessorsystemen der dem Vergleich dienende Bus aus relativ vielen Drähten gebildet sein.

Der Erfindung liegt die Aufgabe zugrunde, Multiprozessorsysteme vorstehend beschriebener Art durch zusätzliche Einrichtungen derart zu verbessern, dass schnelle Vergleiche zur Feststellung des kleinsten der Ergebnisse durchgeführt werden können, die in den unabhängig voneinander arbeitenden Prozessoren ermittelt wurden, wobei die Dauer des Vergleichsverfahrens unabhängig von der Anzahl Prozessoren sein soll und die Sammelleitung nicht durch den Datenvergleichsvorgang beansprucht wird. Diese Aufgabe wird durch die in den Ansprüchen gekennzeichnete Erfindung gelöst. Hierbei werden die zu vergleichenden Ergebnisse in Zähler von den jeweiligen Prozessoren zugeordneten Anschlusslogiken übertragen. Die Anschlusslogiken sind über Ausgänge mit einem Leiter verbunden, der bei Beginn des Vergleiches von allen Ausgängen gleichzeitig aktivierbar ist, wobei die Zähler verzögert zum Aktivierungszeitpunkt gleichzeitig zu zählen beginnen. Der Leiter wird erst dann wieder inaktiv, wenn der Zähler mit der längsten Zählzeit einen Uebertrag erzeugt. Zwecks Feststellung der Inaktivierung steht der Leiter mit Eingängen der Anschlusslogiken in Verbindung, wobei bei demjenigen Prozessor, dessen Zähler die längste Zählzeit aufweist, eine Unterbrechungsanforderung erzeugbar ist.

Die mit der Erfindung erzielten Vorteile sind im wesentlichen darin zu sehen, dass mittels eines einzigen zusätzlichen Leiters ein schneller Vergleich von in unabhängig voneinander arbeitenden Prozessoren ermittelten Ergebnissen ermöglicht wird, wobei unter relativ geringem Software-Aufwand und in kürzester Zeit der Prozessor mit dem kleinsten Ergebnis ermittelbar ist. Ein zusätzlicher Vorteil ergibt sich daraus, dass für die Ankopplung der Prozessoren an den Leiter standardisierte Interface-Bausteine verwendet werden, welche mit relativ kleinem Aufwand durch eine aus handelsüblichen Komponenten bestehende Anschlusslogik ergänzt sind.

Auf beiliegender Zeichnung ist ein Ausführungsbeispiel der Erfindung dargestellt, das im folgenden näher erläutert wird. Es zeigen :

Figur 1  ein Blockschaltbild des beispielsgemässen Multiprozessorsystems,

Figur 2  ein Blockschaltbild einer jedem Prozessor des Systems zugeordneten Anschlusslogik,

Figur 3  ein Diagramm des zeitlichen Verlaufes der Signale der Anschlusslogik eines ersten Prozessors (X) und eines Datenvergleichsleiters,

Figur 4  ein Diagramm des zeitlichen Verlaufes eines Teiles der in Fig. 3 dargestellten Signale der Anschlusslogik eines zweiten Prozessors (Y) und des Datenvergleichsleiters sowie

Figur 5  ein Diagramm des zeitlichen Verlaufes der Signale gemäss der Fig. 4 der Anschlusslogik eines dritten Prozessors (Z) und des Datenvergleichsleiters.

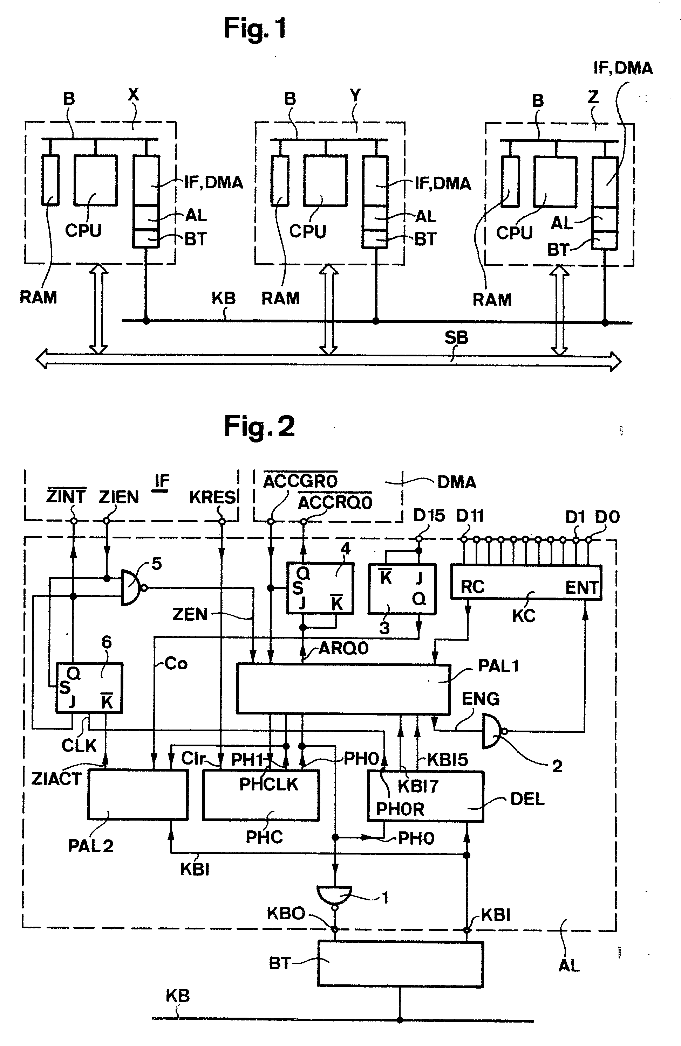

In der Fig. 1 sind mit X, Y und Z drei voneinander unabhängige Mikrocomputersysteme bezeichnet. Die Mikroprozessoren CPU der Systeme X, Y und Z sind in bekannter Weise über einen aus Adressen-, Daten- und Steuerleitungen bestehenden Bus B mit mindestens einem Schreib-Lesespeicher RAM sowie nicht weiter dargestellten Festwertspeichern und Ein-Ausgabebausteinen verbunden. Zum Zwecke des Datenaustausches sind alle Mikrocomputersysteme X, Y, Z auf ebenfalls nicht näher beschriebene Art an einer gemeinsamen Sammelleitung SB angeschlossen. Jedes System X, Y, Z ist über eine aus einem parallelen Interfacebaustein IF, einem DMA-Baustein DMA, einer Anschlusslogik AL und einem Bustreiber BT bestehende Ankopplung an einem Leiter KB angeschlossen, welcher dem Vergleich von in den einzelnen Mikroprozessoren CPU nach den gleichen Kriterien ermittelten Werten dient.

Nach der Fig. 2 besitzt die Anschlusslogik AL einen über den Bustreiber BT mit dem Datenvergleichsleiter KB, im folgenden auch Kostenbus genannt, verbundenen Ausgang KBO, der über ein erstes NICHT-Glied 1 mit dem ersten Ausgang PH0 eines im nachfolgenden auch als Phasenzähler bezeichneten Zählers PHC und einem Eingang einer ersten programmierbaren logischen Anordnung PAL1 verbunden ist. Der Phasenzähler PHC dient der Steuerung des in mehreren Phasen ablaufenden Vergleiches. An einem zweiten, mit der ersten programmierbaren logischen Anordnung PAL1 verbundenen Ausgang PH1 des Phasenzählers PHC tritt die Hälfte der am ersten Ausgang PH0 vorhandenen Signalfrequenz auf. Über einen Eingang Clr des Phasenzählers PHC, der mit einem Ausgang KRES des parallelen Interfacebausteines IF verbunden ist, kann die Zählersteuerung freigegeben werden. Über einen weiteren Eingang PHCLK des Phasenzählers PHC wird ein von der ersten programmierbaren logischen Anordnung PAL1 erzeugtes Zählersteuersignal zugeführt. Mit KBI ist ein mit dem Bustreiber BT verbundener, über diesen den Signalzustand des Kostenbusses KB lesender Eingang der Anschlusslogik AL bezeichnet, der mit einem Eingang eines Verzögerungsgliedes DEL in Verbindung steht. An zwei mit der ersten programmierbaren logischen Anordnung PAL1 verbundenen Ausgängen KBI5, KBI7 der Verzögerungsgliedes DEL tritt das stufenförmig verzögerte Signal des Eingangs KBI der Anschlusslogik AL auf.

Ein Zähler, der im folgenden mit Kostenzähler KC bezeichnet ist, weist zwölf parallele Eingänge D0-D11 auf, die unmittelbar mit den Datenleitungen des Busses B des jeweiligen Mikrocomputersystems X, Y, Z verbunden sind. In den Kostenzähler KC wird bei einem Vergleichsvorgang der zu vergleichende Wert in Form einer 12-Bit-Binärzahl BK geladen. Der Kostenzähler KC besitzt einen Inkrementieranschluss ENT und einen Übertragsanschluss RC, wobei der erstere über ein zweites NICHT-Glied 2 mit einem Ausgang ENG und der letztere mit einem Eingang RC der ersten programmierbaren logischen Anordnung PAL1 in Verbindung steht. Ein beim Vergleichsvorgang ein weiteres Bit Co übertragender Eingang D15 der Anschlusslogik AL ist einerseits mit einem Datenleiter des Busses B und andererseits mit den Eingängen J, $\overline{K}$ eines ersten JK-Flip-Flops 3 verbunden, dessen Ausgang Q an einem Eingang einer zweiten programmierbaren logischen Anordnung PAL2 angeschlossen ist.

Mit 4 ist ein zweites JK-Flip-Flop bezeichnet, dessen Eingänge J, $\overline{K}$ mit einem Ausgang ARQ0 der ersten programmierbaren logischen Anordnung PAL1 und dessen Ausgang Q mit einem ein DMA-Anforderungssignal lesenden Eingang $\overline{ACCRQ0}$ des DMA-Bausteines verbunden sind. Ein eine laufende DMA-Operation signalisierender Ausgang $\overline{ACCGR0}$ des DMA-Bausteines steht mit einem Eingang der ersten programmierbaren logischen Anordnung PAL1 und dem SET-Anschluss des JK-Flip-Flops 4 in Verbindung. Über einen Ausgang ZIEN des parallelen Interfacebausteines IF, der über ein NAND-Glied 5 mit einem Eingang ZEN der ersten programmierbaren logischen Anordnung PAL1 verbunden ist, kann eine DMA-Operation freigegeben werden.

Die an den Ausgängen PHCLK, ARQ0 und ENG der ersten programmierbaren logischen Anordnung PAL1 auftretenden, der Steuerung des Phasenzählers PHC, der Bildung der DMA-Anforderung und der Auslösung des Inkrementiervorganges des Kostenzählers KC dienenden Signale, werden in Abhängigkeit der an den vorstehend beschriebenen Eingängen auftretenden Signale gemäss folgender logischer Gleichungen erzeugt:

$$\overline{\text{PHCLK}} = \text{PH0} \cdot \overline{\text{KBI5}} \cdot \text{KBI7} +$$
$$+ \overline{\text{PH0}} \cdot \text{PH1} \cdot \text{KBI5} \cdot \overline{\text{KBI7}}$$
$$+ \overline{\text{PH0}} \cdot \text{PH1} \cdot \text{KBI5} \cdot \overline{\text{KBI7}} + \text{CLKA}$$

wobei

$$\overline{\text{CLKA}} = \overline{\text{PH0}} \cdot \text{PH1} \cdot \overline{\text{RC}} + \overline{\text{PH0}} \cdot \overline{\text{PH1}} \cdot \overline{\text{ACCGR0}},$$
$$\overline{\text{ARQ0}} = \overline{\text{PH0}} \cdot \overline{\text{PH1}} \cdot \overline{\text{ZEN}} \cdot \text{ACCGR0} \cdot \text{KPI7};$$
$$\overline{\text{ENG}} = \overline{\text{PH0}} \cdot \text{PH1} \cdot \text{KBI7}.$$

Ein drittes JK-Flip-Flop 6, dessen Ausgang Q mit seinem ersten Eingang J sowie dem zweiten Eingang des NAND-Gliedes 5 und einem Eingang $\overline{\text{ZINT}}$ des parallelen Interfacebausteines IF verbunden ist, ist mit seinem zweiten Eingang $\overline{K}$ an einem Ausgang ZIACT der zweiten programmierbaren logischen Anordnung PAL2 angeschlossen. Ueber der Eingang $\overline{\text{ZINT}}$ des parallelen Interfacebausteines IF ist eine am Ausgang Q des dritten JK-Flip-Flops 6 auftretende Unterbrechungsanforderung übertragbar. Ueber einen mit dem Eingang ZIEN des parallelen Interfacebausteines IF verbundenen SET-Eingang S kann die Unterbrechungsanforderung wieder gelöscht werden. Der Taktanschluss CLK des dritten JK-Flip-Flops 6 ist mit einem dritten Ausgang PH0R des Verzögerungsgliedes DEL verbunden, welches einen am ersten Ausgang PH0 des Phasenzählers PHC angeschlossenen weiteren Eingang aufweist, wobei das an diesem Eingang vohandene Signal verzögert am dritten Ausgang PH0R auftritt.

Die zweite programmierbare logische Anordnung PAL2 weist weitere, mit dem zweiten Ausgang PH1 des Phasenzählers PHC und mit dem Eingang KBI der Anschlusslogik AL verbundene Eingänge auf. Das am Ausgang ZIACT auftretende Signal wird in Abhängigkeit der an den vorstehend beschriebenen Eingängen auftretenden Signale gemäss folgender logischer Gleichung erzeugt:

$$\overline{\text{ZIACT}} = \text{PH1} \cdot \text{KBI} \cdot \text{Co} + \text{PH1} \cdot \overline{\text{KBI}} \cdot \overline{\text{Co}}$$

Die für das in die Anschlusslogik AL einzuführende Taktsignal erforderlichen Anschlüsse und Verbindungen sind nicht dargestellt. Die beschriebenen digitalen Verknüpfungsglieder und Bausteine sind im Handel erhältliche Komponenten, wobei beispielsweise für den DMA-Baustein, den parallelen Interfacebaustein IF und den Bustreiber BT solche vom Typ TMS9911, TMS9901 und SN75138 von Texas Instruments verwendet werden können. Die an den verschiedenen Ein- und Ausgängen der Bausteine auftretenden Signale, worunter auch Signalfolgen zu verstehen sind, tragen die gleichen Bezeichnungen wie die betreffenden Ein- und Ausgänge.

Das vorstehend beschriebene Multiprozessorsystem arbeitet bei einem Datenvergleichsvorgang wie folgt:

Es sei beispielsweise angenommen, dass die Mikrocomputersysteme X, Y, Z den einzelnen Aufzügen einer aus drei Aufzügen bestehenden Aufzugsgruppe zugeordnet sind, wobei die Systeme sowohl der Antriebssteuerung und -regelung, als auch beispielsweise der zeitlichen Optimierung der Zuordnungen von Aufzugskabinen zu Stockwerkrufen dienen können. In letzterem Fall berechnet jedes System aus bestimmten aufzugsspezifischen Parametern, wie beispielsweise der Distanz zwischen einem betrachteten Rufstockwerk und der Aufzugskabine, der Anzahl der innerhalb dieser Distanz zu erwartenden möglichen Zwischenhalte aufgrund vorhandener Kabinen- und bereits dieser Kabine zugeordneter Stockwerkrufe sowie der momentanen Kabinenlast, eine zeitproportionale Summe BK. Diese der Einsatzfähigkeit einer Kabine hinsichtlich des betrachteten Rufstockwerkes entsprechende Summe BK in Form einer Binärzahl wird in einen Schreib-Lesespeicher RAM des betreffenden Systems X, Y, Z eingeschrieben, wobei die Adresse des Speicherplatzes der Nummer des jeweils betrachteten Rufstockwerkes entspricht. Bei einem für dieses Stockwerk durchgeführten Vergleich der Summen $BK_x$, $BK_y$, $BK_z$ der Systeme X, Y, Z wird die Kabine mit der geringsten, einer kleinsten Verlustzeit wartender Fahrgäste entsprechenden Summe BK dem betrachteten Rufstockwerk zugeteilt.

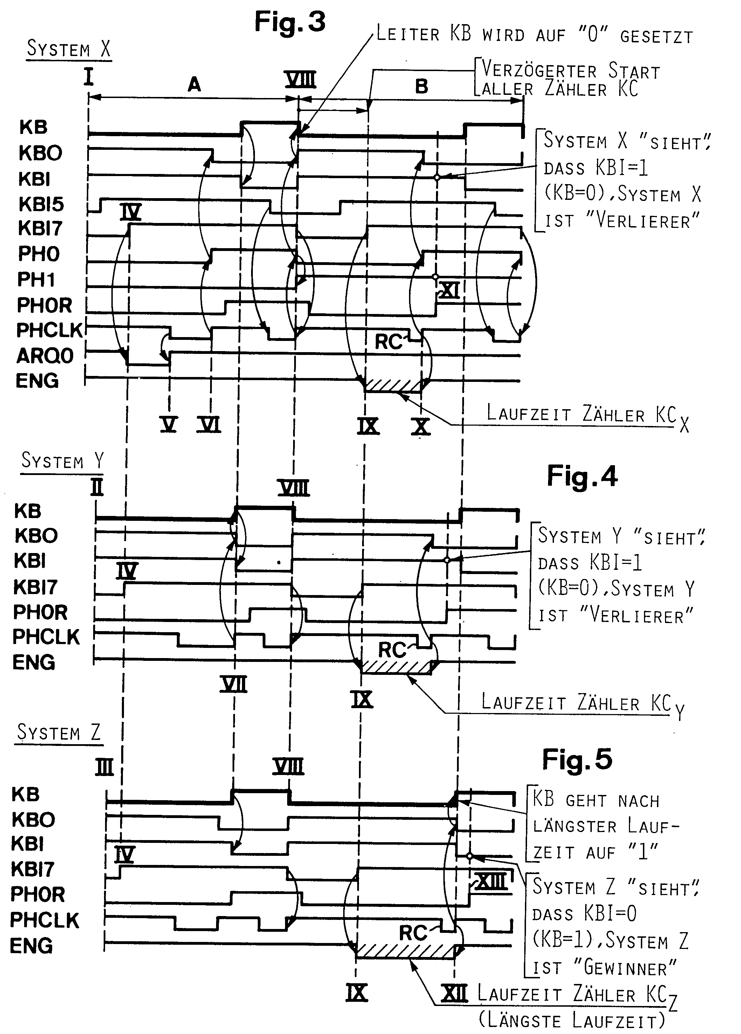

Der Vergleich erfolgt in mehreren, zeitlich aufeinanderfolgenden Phasen, wobei während einer ersten Phase A durch ein von einem Prozessor CPU ausgehendes, über die Sammelleitung SB an alle anderen Prozessoren des Systems gesendetes Synchronisationssignal alle parallelen Interfacebausteine IF angesteuert werden. Hierbei tritt am Ausgang KRES der parallelen Interfacebausteine IF zu annähernd gleichen Zeitpunkten I, II, III (Fig. 3, 4, 5) ein Signalwechsel auf, worauf die Steuerung des Phasenzählers PHC freigegeben wird. Mit der zuerst erfolgenden Freigabe, beispielsweise des Phasenzählers PHC des Systems X, ist der Kostenbus KB aktiviert, wobei er niederes Potential aufweisen möge (Zeitpunkt I, Fig. 3). Der Ausgang KBO und der Eingang KBI der Anschlusslogik AL, im folgenden Vergleichsausgang KBO und Vergleichseingang KBI genannt, sind dabei auf hohes Potential gesetzt. Nach der Freigabe des letzten Phasenzählers PHC (Zeitpunkt III, Fig. 5) erfolgt zu einem mittels des Verzögerungsgliedes DEL festgelegten, die Aktivierung des Kostenbusses KB verzögert signalisierenden Zeitpunkt IV (Fig. 3, 4, 5) bei allen Systemen X, Y, Z gleichzeitig ein Wechsel des Ausgangssignals KB17, wobei am Ausgang ARQ0 der ersten programmierbaren logischen Anordnung PAL1 ein Signalwechsel stattfindet und über das zweite JK-Flip-Flop 4 ein DMA-Anforderungssignal $\overline{\text{ACCRQ0}}$ erzeugt wird.

Die einzelnen DMA-Bausteine signalisieren nun in bekannter Weise dem jeweiligen zugeordneten Prozessor CPU, dass sie die Kontrolle über den Datenbus wünschen. Das wird nach einer gewissen Latenzzeit gewährt, wobei der DMA-Baustein ein Signal $\overline{ACCGR0}$ abgibt (Zitpunkt V, Fig. 3), mit dessen Beginn das Phasenzähler-Steuersignal PHCLK niedrig und das die DMA-Anforderung steuernde Signal ARQ0 hoch gesetzt wird. Während der Dauer des Signals $\overline{ACCGR0}$ gibt der DMA-Baustein eine Adresse auf den Adressenbus, so dass ein Speicherplatz des die zu vergleichenden Summen BK enthaltenden Schreib-Lesespeichers RAM angesprochen wird, worauf der Speicherplatzinhalt über den Datenbus und die Eingänge D0-D11 in den Kostenzähler KC transferiert wird. Gleichzeitig wird über den Eingang D15 ein Kontrollbit Co übertragen und im ersten JK-Flip-Flop 3 gespeichert. Hierbei bedeutet Co = 1, dass das betreffende System X, Y, Z beim vorhergehenden Vergleich desselben Stockwerkes die kleinste Summe BK ermittelt und gespeichert hatte. Demzufolge bedeutet Co = 0, dass das betreffende System X, Y, Z nicht die kleinste Summe BK aufwies. Nach der beispielsweise zuerst erfolgenden Beendigung des Datentransfers des Systems X und Verschwinden des Signals $\overline{ACCGR0}$, gehen das Steuersignal PHCLK und das erste Phasensignal PH0 des Phasenzählers PHC hoch (Zeitpunkt VI, Fig. 3), womit der entsprechende Vergleichsausgang KBO der Anschlusslogik AL niedrig gesetzt wird. Nach Beendigung des Datentransfers des letzten aller Systeme, beispielsweise des Systems Y, werden das Potential des Kostenbusses KB hoch und alle Vergleichseingänge KBI niedrig gesetzt (Zeitpunkt VII, Fig. 4).

Nach einer durch das Verzögerungsglied DEL bedingten Verzögerung des Signals KBI gehen die Signale KBI5 und KBI7 nacheinander auf niederes Potential, wobei das Phasenzähler-Steuersignal PHCLK erst auf niederes und dann auf hohes Potential gesetzt wird. In der Folge wechseln das erste Phasensignal PH0, das zweite Phasensignal PH1 und das Signal KBO aller Systeme X, Y, Z gleichzeitig, womit der Kostenbus KB erneut aktiviert und eine zweite Phase B des Vergleiches eingeleitet ist (Zeitpunkt VIII, Fig. 3, 4, 5). Da zu diesem Zeitpunkt der Kostenbus KB auf niederes und alle Vergleichseingänge KBI auf hohes Potential wechseln, wird nach einer bestimmten Verzögerung auch das Signal KBI7 hoch gesetzt, wobei über die erste programmierbare Anordnung PAL1 ein Wechsel des Signals ENG hervorgerufen und ein Inkrementiervorgang aller Kostenzähler KC gleichzeitig gestartet wird (Zeitpunkt IX, Fig. 3, 4, 5).

Es möge nun angenommen sein, dass der Kostenzähler KC des Systems X (Fig. 3) die grösste Summe BK und damit das kleinste Komplement $\overline{BK}$ enthält. Dieser Kostenzähler KC wird daher als erster einen Übertrag RC erzeugen, wobei ein zweimaliger Wechsel des Phasenzähler-Steuersignals PHCLK erfolgt, welcher das Setzen des ersten Phasensignals PH0 auf hohes und damit des Vergleichsausgangs KBO der betreffenden Anschlusslogik AL auf niederes sowie einen den Inkrementiervorgang beendenden Wechsel des Signals ENG bewirkt (Zeitpunkt X, Fig. 3). Weiterhin sei angenommen, dass das System X vom letzten Vergleich herrührend die kleinste Summe BK ermittelt hatte, wobei das Kontrollbit Co = 1 ist. In diesem Falle wird, da der Kostenbus KB immer noch niederes und alle Vergleichseingänge KBI sowie das die zweite Phase B kontrollierende zweite Phasensignal PH1 hohes Potential aufweisen (Zeitpunkt X, Fig. 3), über die zweite programmierbare logische Anordnung PAL2 ein Wechsel des Signals ZIACT am zweiten Eingang $\overline{K}$ des dritten JK-Flip-Flops 6 hervorgerufen. Bei Aenderung des verzögert zum ersten Phasensignal PH0 auftretenden Taktsignals PH0R am Taktanschluss CLK des dritten JK-Flip-Flops 6 (Zeitpunkt XI, Fig. 3) wird an dessen Ausgang Q eine Zuteilungsunterbrechung $\overline{ZINT}$ erzeugt, mittels welcher der Mikroprozessor CPU des Systems X über den Eingang $\overline{ZINT}$ des parallelen Interfacebausteines IF veranlasst wird, das im Schreib-Lesespeicher RAM zusätzlich zur Summe BK gespeicherte Kontrollbit Co von « 1 » in « 0 » zu ändern.

Es sei weiterhin angenommen, dass das System Z (Fig. 5) beim vorhergehenden Vergleich das Kontrollbit Co = 0 gespeichert hatte, beim momentanen Vergleich jedoch die kleinste Summe BK und daher das grösste Komplement $\overline{BK}$ aufweist, so dass hier der Uebertrag RC zuletzt erzeugt wird (Zeitpunkt XII, Fig. 5). Hierbei gehen das erste Phasensignal PH0 und der Kostenbus KB auf hohes und der Vergleichsausgang KBO sowie alle Vergleichseingänge KBI auf niederes Potential. Bei Aenderung des verzögert zum ersten Phasensignal PH0 auftretenden Taktsignals PH0R des dritten JK-Flip-Flops 6 (Zeitpunkt XIII, Fig. 5) wird an dessen Ausgang Q ebenfalls eine Zuteilungsunterbrechung $\overline{ZINT}$ erzeugt mittels welcher der Mikroprozessor CPU des Systems Z über den Eingang $\overline{ZINT}$ des parallelen Interfacebausteines IF veranlasst wird, das im Schreib-Lesespeicher RAM zusätzlich zur Summe BK gespeicherte Kontrollbit Co von « 0 » in « 1 » zu ändern. Damit kann, wie anfangs erwähnt, jedoch nicht näher beschrieben, der Aufzug Z dem betrachteten Rufstockwerk zugeteilt werden und dieses bedienen.

Ergibt der Vergleich in der Phase B, dass mehrere Systeme die genau gleichen Summen BK ermittelt haben, so kann in einer nicht weiter beschriebenen dritten Phase C mittels einer geeigneten die Priorität bestimmenden Einrichtung das optimale System ermittelt werden.

**Ansprüche**

1. Multiprozessorsystem, bestehend aus mehreren Prozessoren (CPU), die an einer gemeinsamen Sammelleitung (SB) angeschlossen sind,

— wobei jedem Prozessor (CPU) ein aus Adressen-, Daten- und Steuerleitungen bestehender Bus (B) zugeordnet ist, über welchen er mit je mindestens

— einem Schreib-Lesespeicher (RAM), einem parallelen Interfacebaustein (IF) und einem DMA-Baustein (DMA) verbunden ist, und

— wobei bei Auftreten mindestens eines von mindestens einem Prozessor (CPU) ausgehenden Synchronisationssignals von den Prozessoren (CPU) ermittelte Ergebnisse in Form von Binärzählen (BK) mittels einer DMA-Operation aus den zugeordneten Schreib-Lesespeichern (RAM) abrufbar sind, dadurch gekennzeichnet,

— dass je Prozessor (CPU) ein wie an sich bekannt an den Datenleitungen des Busses (B) angeschlossener Zähler (KC) vorgesehen ist, in welchen die betreffende Binärzahl (BK) mittels der DMA-Operation übertragbar ist, und welcher in einer Anschlusslogik (AL) für einen Vergleich zur Ermittlung der kleinsten übertragenen Binärzahl (BK) angeordnet ist,

— dass die Anschlusslogik (AL) mit einem Freigabeausgang (KRES) und einem Unterbrechungsanforderungseineingang ($\overline{ZINT}$) des parallelen Interfacebausteines (IF) sowie mit einem DMA-Anforderungseingang (ACCRQ0) des DMA-Bausteines (DMA) verbunden ist,

— dass die Anschlusslogik (AL) einen den Beginn (VIII) des Vergleiches der Binärzahlen (BK) signalisierenden Ausgang (KBO) und einen das Ende (XII) des Vergleiches signalisierenden Eingang (KBI) aufweist,

— dass die Ausgänge (KBO) aller Anschlusslogiken (AL) über je einen Bustreiber (BT) mit einem Leiter (KB) zu dem Zwecke verbunden sind, dass der Beginn des Vergleiches durch gleichzeitige Aktivierung des Leiters (KB) über alle Ausgänge (KBO) steuerbar ist, wobei die Zähler (KC) aller Anschlusslogiken (AL) verzögert zum Aktivierungszeitpunkt gleichzeitig zu zählen beginnen,

— dass die Eingänge (KBI) aller Anschlusslogiken (AL) zum Zwecke der Feststellung der Inaktivierung des Leiters (KB) über die Bustreiber (BT) mit dem Leiter (KB) verbunden sind, wobei erst nach Erzeugung des Uebertrages des Zählers (KC) mit der längsten Zählzeit der Leiter (KB) inaktiviert und über die Eingänge (KBI) das Ende (XII) des Vergleiches signalisiert wird, und

— dass der Eingang (KBI) derart mit dem Unterbrechungsanforderungseingang ($\overline{ZINT}$) des parallelen Interfacebausteines (IF) verknüpft ist, dass nach dem Ende (XII) des Vergleiches eine Unterbrechungsanforderung zur Signalisation des Prozessors (CPU) mit der kleinsten Binärzahl (BK) erzeugbar ist.

2. Multiprozessorsystem nach Anspruch 1, dadurch gekennzeichnet,

— dass die Anschlusslogik (AL) einen weiteren Zähler (PHC), ein Verzögerungsglied (DEL) und eine erste programmierbare logische Anordnung (PAL1) aufweist, welche mit einem die Beendigung der Übertragung der Binärzahl (BK) signalisierenden Ausgang ($\overline{ACCGR0}$) des DMA-Bausteines, einem ersten und zweiten Ausgang (PH0, PH1) und einem Eingang (PHCLK) des weiteren Zählers (PHC) sowie mit einem ersten und zweiten Ausgang (KBI5, KBI7) des Verzögerungsgliedes (DEL) verbunden ist, und

— dass der Ausgang (KBO) der Anschlusslogik (AL) über ein erstes NICHT-Glied (1) am ersten Ausgang (PH0) des weiteren Zählers (PHC) und der Eingang (KBI) der Anschlusslogik (AL) an einem Eingang des Verzögerungsgliedes (DEL) angeschlossen sind,

— wobei bei Beendigung der Übertragung der Binärzahl (BK) ein Signalwechsel (VI) am Eingang (PHCLK) und am ersten Ausgang (PH0) des weiteren Zählers (PHC) sowie des Ausgangs (KBO) der Anschlusslogik (AL), und bei Beendigung der Übertragung der letzten Binärzahl (BK) zusätzlich ein erster Signalwechsel (VII) des Leiters (KB) und aller der jeweiligen Anschlusslogik (AL) zugehöriger Eingänge (KBI) gleichzeitig stattfindet, und

— wobei bei einem in Abhängigkeit des ersten Signalwechsels (VII) verzögert auftretenden Signalwechsel des ersten und zweiten Ausgangs (KBI5, KBI7), der Verzögerungsglieder (DEL) ein zweiter Signalwechsel (VIII) des Leiters (KB) und aller der jeweiligen Anschlusslogik zugehöriger Aus- und Eingänge (KBO, KBI) gleichzeitig hervorgerufen wird.

3. Multiprozessorsystem nach Anspruch 1 oder 2, dadurch gekennzeichnet,

— dass ein Inkrementieranschluss (ENT) des Zählers (KC) über ein zweites NICHT-Glied (2) mit einem Ausgang (ENG) und ein Übertragsanschluss (RC) des Zählers (KC) mit einem Eingang (RC) der ersten programmierbaren logischen Anordnung (PAL1) verbunden sind,

— wobei bei einem in Abhängigkeit des zweiten Signalwechsels (VIII) des Leiters (KB) verzögert auftretenden weiteren Signalwechsel des ersten und zweiten Ausgangs (KBI5, KBI7) der Verzögerungsglieder (DEL) am Ausgang (ENG) aller ersten programmierbaren logischen Anordnungen (PAL1) ein Signalwechsel (IX) auftritt und alle Zähler (KC) gleichzeitig zu inkrementieren beginnen, und

— wobei bei Beendigung des Inkrementierens und Erzeugen eines Übertrages (RC) eines Zählers (KC) ein Signalwechsel (X) am Eingang (PHCLK) und am ersten Ausgang (PH0) des zugehörigen weiteren Zählers (PHC) sowie des Ausgangs (KBO) der Anschlusslogik (AL), und bei Beendigung des Inkrementierens und Erzeugen eines Übertrages (RC) des die längste Zählzeit aufweisenden Zählers (KC) ein dritter Signalwechsel (XII) des Leiters (KB) und aller der jeweiligen Anschlusslogik (AL) zugehöriger Eingänge (KBI) gleichzeitig stattfindet.

4. Multiprozessorsystem nach Anspruch 1 oder 2, dadurch gekennzeichnet,

— dass die Anschlusslogik (AL) ein erstes JK-Flip-Flop (3), ein drittes JK-Flip-Flop (6) und eine zweite programmierbare Anordnung (PAL2) aufweist, welche mit einem Eingang ($\overline{K}$) des dritten JK-Flip-Flops (6), dem zweiten Eingang (PH1) des weiteren Zählers (PHC), dem Eingang (KBI) der Anschlusslogik (AL) und dem Ausgang (Q) des ersten JK-Flip-Flops (3) verbunden ist, in welchem ein gleichzeitig mit der Binärzahl (BK) übertragbares, einen Prozessor mit einem kleinsten oder einem grösseren Ergebnis signalisierendes Kontrollbit (Co) speicherbar ist,

— dass das Verzögerungsglied (DEL) einen weiteren, am ersten Ausgang (PH0) des weiteren Zählers (PHC) angeschlossenen Eingang und einen dritten Ausgang (PH0R) aufweist, der mit dem Taktanschluss (CLK) des dritten JK-Flip-Flops (6) verbunden ist, und

— dass der Ausgang (Q) des dritten JK-Flip-Flops (6) am Unterbrechungsanforderungs-Eingang (ZINT) des parallelen Interfacebausteines (IF) angeschlossen ist,

— wobei nach Erzeugen des Übertrages (RC) ein Signalwechsel (XI, XIII) am dritten Ausgang (PH0R) des Verzögerungsgliedes (DEL) stattfindet, bei dessen Auftreten vor dem dritten Signalwechsel (XII) des Leiters (KB) eine ein grösseres Ergebnis, und bei dessen Auftreten nach dem dritten Signalwechsel (XII) des Leiters (KB) eine ein kleinstes Ergebnis des betreffenden Prozessors signalisierende Unterbrechungsanforderung am Ausgang (Q) des dritten JK-Flip-Flops (6) erzeugbar ist.

**Claims**

• 1. Multiprocessor system consisting of several processors (CPU), which are connected to a common collecting line (SB),

— wherein each processor (CPU) is associated with a bus (B), which consists of address lines, data lines and control lines and through which it is connected with at least

— one respective read-write store (RAM), one respective parallel interface block (IF) and one respective DMA-block (DMA), and

— wherein on the occurrence of at least one synchronising signal emanating from at least one processor (CPU), results determined by the processors (CPU) in the form of binary numbers (BK) can be called up from the associated read-write stores (RAM) by means of a DMA-operation, characterised thereby,

— that a respective counter (KC), which is connected as actually known to the data lines of the bus (B), in which the binary number (BK) concerned is transferable by means of the DMA-operation, and arranged in a connecting logic device (AL) for a comparison for the determination of the smallest transmitted binary number (BK), is provided for each processor (CPU),

— that the connecting logic device (AL) is connected with a release output (KRES) and an interruption demand input (ZINT) of the parallel interface block (IF) as well as with a DMA-demand input (ACCRQ0) of the DMA-block (DMA),

— that the connecting logic device (AL) displays an output (KBO) signalling the start (VIII) of the comparison of the binary numbers (BK) and an input (KBI) signalling the end (XII) of the comparison,

— that the outputs (KBO) of all connecting logic devices (AL) are connected through a respective bus driver (BT) with a conductor (KB) for the purpose that the start of the comparison is controllable through simultaneous activation of the conductor (KB) by way of all outputs (KBO), wherein the counters (KC) of all connecting logic devices (AL) start simultaneously to count delayed with respect to the instant of activation,

— that the inputs (KBI) of all connecting logic devices (AL) are for the purpose of ascertaining the non-activation of the conductor (KB) connected through the bus drivers (BT) with the conductor (KB), wherein the conductor (KB) is inactivated and the end (XII) of the comparison is signalled by way of the inputs (KBI) only after generation of the carry of the counter (KC) with the longest counting time,

— that the input (KBI) is logically interlinked with the interruption demand input (ZINT) of the parallel interface block (IF) in such a manner that an interruption demand is producible after the end (XII) of the comparison for signalling of the processor (CPU) with the smallest binary number (BK).

2. Multiprocessor system according to patent claim 1, characterised thereby,

— that the connecting logic device (AL) displays a further counter (PHC), a delaying member (DEL) and a first programmable logic arrangement (PAL1), which is connected with an output (ACCGR0) of the DMA-block signalling the termination of the transfer of the binary number (BK), a first and second output (PH0, PH1) and an input (PHCLK) of the further counter (PHC) as well as with a first and second output (KBI5, KBI7) of the delaying member (DEL), and

— that the output (KBO) of the connecting logic device (AL) is connected through a first NOT-member (1) to the first output (PH0) of the further counter (PHC) and the input (KBI) of the connecting logic device (AL) is connected to one input of the delaying member (DEL),

— wherein on termination of the transfer of the binary number (BK), a signal change (VI) takes place at the input (PHCLK) and at the first output (PH0) of the further counter (PHC) as well as at the output (KBO) of the connecting logic device (AL), and on termination of the transfer of the last binary number (BK), a first signal change (VII) of the conductor (KB) and all the inputs (KBI) belonging to the respective connecting logic device (AL) additionally takes place simultaneously, and

— wherein on a signal change, which occurs delayed in dependence on the first signal change (VII), at the first and second output (KBI5, KBI7) of the delaying members (DEL), a second signal change (VIII) of the conductor (KB) and all the outputs and inputs (KBO, KBI) belonging to the respective connecting logic device is brought about simultaneously.

3. Multi-processor system according to patent claim 1 or 2, characterised thereby,

— that an incrementing connection (ENT) of the counter (KC) is connected through a second NOT-member (2) with an output (ENG) and a carry connection (RC) of the counter (KC) is connected with an input (RC) of the first programmable logic arrangement (PAL1),

— wherein on a further signal change, which occurs delayed in dependence on the second signal change (VIII) of the conductor (KB), at the first and second output (KBI5, KBI7) of the delaying members (DEL), a signal change (IX) takes place at the output (ENG) of all first programmable logic arrangements (PAL1) and all counters (KC) start to increment simultaneously, and

— wherein on termination of the incrementing and generation of a carry (RC) of a counter (KC) a signal change (X) takes place at the input (PHCLK) and at the first output (PH0) of the associated further counter (PHC) as well as at the output (KBO) of the connecting logic device (AL), and on termination of the incrementing and generation of a carry (RC) of the counter (KC) displaying the longest counting time, a third signal change (XII) of the counductor (KB) and all the inputs (KBI) belonging to the respective connecting logic device (AL) takes place simultaneously.

4. Multi-processor system according to patent claim 1 or 2, characterised thereby,

— that the connecting logic device (AL) displays a first JK-flip-flop (3), a third JK-flip-flop (6) and a second programmable arrangement (PAL2), which is connected with an input $(\overline{K})$ of the third Jk-flip-flop (6), the second input (PH1) of the further counter (PHC), the input (KBI) of the connecting logic device (AL) and the output (Q) of the first JK-flip-flop (3), in which is storable a check bit (Co) which is transferable simultaneously with the binary number (BK) and signals a processor with a smallest or a greater result,

— that the delaying member (DEL) displays a further input connected to the first output (PH0) of the further counter (PHC) and a third output (PH0R) which is connected with the clock connection (CLK) of the third JK-flip-flop (6), and

— that the output (Q) of the third JK-flip-flop (6) is connected to the interruption demand input $(\overline{ZINT})$ of the parallel interface block (IF),

— wherein after generation of the carry (RC), a signal change (XI, XIII) takes place at the third output (PH0R) of the delaying member (DEL), on the occurrence of which before the third signal change (XII) of the conductor (KB), an interruption demand signalling a greater result, and on the occurrence of which after the third signal change (XII) of the conductor (KB), an interruption demand signalling a smallest result of the processor concerned is produceable at the output (Q) of the third JK-flip-flop (6).


**Revendications**

1. Système multiprocesseur composé de plusieurs processeurs (CPU), qui sont connectés à une ligne collectrice commune (SB),

— dans lequel chaque processeur (CPU) est associé à un bus (B) composé de lignes d'adresse, de données et de commandes, au moyen duquel il est connecté respectivement à au moins

— une mémoire de lecture et d'écriture (RAM),

— une unité d'interface parallèle (IF) et

— une unité DMA (DMA), et

— dans lequel à l'apparition d'au moins un signal de synchronisation émis par au moins un processeur (CPU), les résultats déterminés par les processeurs (CPU) sous la forme de nombres binaires (BK), peuvent être appelés au moyen d'une opération DMA, des mémoires de lecture et d'écriture (RAM) associées,
caractérisé,

— en ce qu'à chaque processeur (CPU) est prévu un compteur (KC) connecté, de manière connue en soi, aux lignes de données du bus (B), compteur dans lequel le nombre binaire (BK) correspondant peut être transféré, au moyen de l'opération DMA, et qui est monté dans un circuit logique de connexion (AL) pour une comparaison destinée à déterminer le plus petit nombre binaire (BK) transféré,

— en ce que le circuit logique de connexion (AL) est relié à une sortie de déclenchement (KRES) et à une entrée d'ordre d'interruption $(\overline{ZINT})$ de l'unité d'interface parallèle (IF), ainsi qu'à une entrée d'appel DMA (ACCRQ0) de l'unité DMA (DMA),

— en ce que le circuit logique de connexion (AL) présente une sortie (KBO) signalant le point de départ (VIII) de la comparaison des nombres binaires (BK) et une entrée (KBI) signalant la fin (XII) de la comparaison,

— en ce que les sorties (KBO) de tous les circuits logiques de connexion (AL) sont reliées respectivement par une unité pilote de bus (BT) à un conducteur (KB) afin que le déclenchement de la comparaison puisse être commandé par une activation simultanée du conducteur (KB) par toutes les sorties (KBO), l'arrangement étant tel que les compteurs (KC) de tous les circuits logiques de connexion (AL) commencent à compter simultanément avec un certain retard par rapport à l'instant de l'activation,

— en ce que les entrées (KBI) de tous les circuits logiques de connexion (AL), dans le but de constater la désactivation du conducteur (KB), sont reliées, par l'unité pilote de bus (BT), au conducteur (KB), cependant que ce n'est qu'après que le report du compteur (KC) ayant le temps de comptage le plus long a été produit, que le conducteur (KB) est désactivé et que, par les entrées (KBI), la fin (XII) de la comparaison est signalée, et

— en ce que l'entrée (KBI) est connectée avec l'entrée d'ordre d'interruption $(\overline{ZINT})$ de l'unité d'interface parallèle (IF) de telle manière qu'après la fin (XII) de la comparaison, un ordre d'interruption peut être engendré pour signaler le processeur (CPU) comportant le plus petit nombre binaire (BK).

2. Système multiprocesseur selon la revendication 1, caractérisé,

— en ce que le circuit logique de connexion (AL) comporte un compteur supplémentaire (PHC), un organe retardateur (DEL) et un premier circuit logique programmable (PAL1) qui est relié à une sortie $\overline{(ACCGR0)}$ de l'unité DMA signalant la fin du transfert du nombre binaire (BK), à une première et une seconde sorties (PH0, PH1) et à une entrée (PHCLK) du compteur supplémentaire (PHC), ainsi qu'à une première et une seconde sorties (KBI5, KBI7) de l'organe retardateur (DEL), et

— en ce que la sortie (KBO) du circuit logique de connexion (AL) est reliée par un premier circuit NON (1) à la première sortie (PH0) du compteur supplémentaire (PHC), tandis que l'entrée (KBI) du circuit logique de connexion (AL) est reliée à l'une des entrées de l'organe retardateur (DEL),

— de sorte qu'à la fin du transfert du nombre binaire (BK), un basculement de signal (VI) a lieu à l'entrée (PHCLK) et à la première sortie (PH0) du compteur supplémentaire (PHC), ainsi qu'à la sortie (KBO) du circuit logique de connexion (AL), tandis qu'à la fin du transfert du dernier nombre binaire (BK) se produit, en outre, un premier basculement de signal (VII) sur le conducteur (KB) et simultanément sur toutes les entrées correspondantes (KBI) des circuits logiques de connexion respectifs (AL), et

— que, lors d'un basculement de signal de la première et·de la seconde sorties (KBI5, KBI7) des organes retardateurs (DEL), apparaissant avec un certain retard par rapport au premier changement de signal (VII), un second changement de signal (VIII) du conducteur (KB) et de toutes les entrées et sorties (KBO, KBI) correspondantes .des circuits logiques de connexion respectifs est produit simultanément. .

3. Système multiprocesseur selon la revendication 1 ou 2, caractérisé en ce que

— une borne d'incrémentation (ENT) du compteur (KC) est reliée, par un second circuit NON (2) à une sortie (ENG) et une borne de transfert (RC) du compteur (KC) est reliée à une entrée (RC) du premier circuit logique programmable (PAL1),

— tandis que, lors d'un basculement de signal supplémentaire de la première et de la seconde sorties (KBI5, KBI7) des organes retardateurs (DEL), provoqué avec un certain retard par rapport au second basculement de signal (VIII) du conducteur (KB) il se produit à la sortie (ENG) de tous les premiers circuits logiques programmables (PAL1), un basculement de signal (IX), et tous les compteurs (KC) commencent à s'incrémenter simultanément, et

— qu'à la fin de l'incrémentation et lors de la production d'un report (RC) d'un compteur (KC), a lieu un basculement de signal (X) simultanément à l'entrée (PHCLK) et à la première sortie (PH0) du compteur supplémentaire correspondant (PHC), ainsi qu'à la sortie (KBO) du circuit logique de connexion (AL), tandis qu'à la fin de l'incrémentation et lors de la production d'un report (RC) du compteur (KC) présentant le temps de comptage le plus long, un troisième basculement de signal (XII) du conducteur (KB) et de toutes les entrées (KBI) correspondantes des circuits de connexion logiques (AL) respectifs se produisent simultanément.

4. Système multiprocesseur selon la revendication 1 ou 2, caractérisé,

— en ce que le circuit logique de connexion (AL) comprend une première bascule JK (3), une troisième bascule JK (6) et un second circuit programmable (PAL2) qui est relié à une entrée (K) de la troisième bascule JK (6), à la seconde entrée (PH1) du compteur supplémentaire (PHC), à l'entrée (KBI) du circuit logique de connexion (AL) et à la sortie (Q) de la première bascule JK (3), dans laquelle un bit de contrôle (Co) transférable en même temps que le nombre binaire (BK) et signalant un processeur ayant un plus petit ou un plus grand résultat peut être mémorisé,

— en ce que l'organe retardateur (DEL) comporte une entrée supplémentaire, connectée à la première sortie (PH0) du compteur supplémentaire (PHC) et une troisième sortie (PH0R) qui est reliée à la borne d'horloge (CLK) de la troisième bascule JK (6), et

— en ce que la sortie (Q) de la troisième bascule JK (6) est connectée à l'entrée d'ordre d'interruption $\overline{(ZINT)}$ de l'unité d'interface parallèle (IF),

— de sorte qu'après la production du report (RC), il se produit, sur la troisième sortie (PH0R) de l'organe retardateur (DEL), un basculement de signal (XI, XIII) à l'apparition duquel, avant le troisième basculement de signal (XII) du conducteur (KB), peut être produit à la sortie (Q) de la troisième bascule JK (6), un ordre d'interruption signalant un plus grand résultat et, après le troisième changement de signal (XII) du conducteur (KB), un ordre d'interruption signalant un plus petit résultat du processeur correspondant.

# Fig. 1

# Fig. 2

1

0 050 304

**Fig. 3**

SYSTEM X

LEITER KB WIRD AUF "0" GESETZT

VERZÖGERTER START ALLER ZÄHLER KC

SYSTEM X "SIEHT", DASS KBI=1 (KB=0), SYSTEM X IST "VERLIERER"

LAUFZEIT ZÄHLER KC$_X$

**Fig. 4**

SYSTEM Y

SYSTEM Y "SIEHT", DASS KBI=1 (KB=0), SYSTEM Y IST "VERLIERER"

LAUFZEIT ZÄHLER KC$_Y$

**Fig. 5**

SYSTEM Z

KB GEHT NACH LÄNGSTER LAUF-ZEIT AUF "1"

SYSTEM Z "SIEHT", DASS KBI=0 (KB=1), SYSTEM Z IST "GEWINNER"

LAUFZEIT ZÄHLER KC$_Z$ (LÄNGSTE LAUFZEIT)

2